**Europäisches Patentamt**

**European Patent Office**

**Office européen des brevets**

(11) Veröffentlichungsnummer: **0 163 824**
**B1**

(12) **EUROPÄISCHE PATENTSCHRIFT**

(45) Veröffentlichungstag der Patentschrift: **03.10.90**

(21) Anmeldenummer: **85103054.4**

(22) Anmeldetag: **16.03.85**

(51) Int. Cl.⁵: **G 01 D 5/38**, G 01 D 5/36

(54) Photoelektrische Messeinrichtung.

(30) Priorität: **09.05.84 DE 3417176**

(43) Veröffentlichungstag der Anmeldung:
**11.12.85 Patentblatt 85/50**

(45) Bekanntmachung des Hinweises auf die
Patenterteilung:
**03.10.90 Patentblatt 90/40**

(84) Benannte Vertragsstaaten:
**AT CH DE FR GB IT LI NL SE**

(56) Entgegenhaltungen:
**EP-A-0 100 243**
**DE-A-1 814 785**
**DE-A-2 316 248**
**US-A-3 482 107**

**IBM TECHNICAL DISCLOSURE BULLETIN, Band
18, Nr. 1, Juni 1975, Seiten 229-230, New York,
US; C.P. BARNARD et al.: "Precise optical
position indication"**

(73) Patentinhaber: **Dr. Johannes Heidenhain GmbH
Dr.-Johannes-Heidenhain-Strasse 5 Postfach
1260
D-8225 Traunreut (DE)**

(72) Erfinder: **Michel, Dieter, Dipl.-Ing.
Langauenstrasse 12
D-8220 Traunstein (DE)**

**Beschreibung**

Die Erfindung bezieht sich auf eine photoelektrische Vorrichtung nach dem Oberbegriff des Anspruches 1.

Derartige Vorrichtungen sind bei inkrementalen Längen- oder Winkelmeßeinrichtungen üblich, damit beispielsweise ein für die Meßeinrichtung definierter Nullpunkt festgelegt und reproduziert werden kann.

In der DE—OS—18 14 785 ist der Aufbau einer Referenzmarke zur Erzeugung eines Referenzimpulses beschrieben.

Die Referenzmarke befindet sich auf der Maßverkörperung und besteht aus einer Strichgruppe mit unregelmäßiger Strichverteilung. Die Abtastplatte weist eine identische Strichgruppe auf. Wenn sich beide Strichgruppen vollständig decken, tritt die größte Lichtintensität auf, die von einem Detektor in ein Signal als Referenzimpuls umgewandelt wird. Die Abtastung erfolgt nach der Schattenwurfmethode, die geometrisch-optisch erklärbar ist.

Ein genügend exakter Referenzimpuls läßt sich jedoch nur von einer derartigen Referenzmarke ableiten, wenn der Abtastabstand sehr klein ist und dementsprechend engen Toleranzen hinsichtlich der Abstandsschwankungen unterliegt.

Bei der photoelektrischen Abtastung bisher bekannter Referenzmarken erhält man Eintaktsignale. Um die zur sicheren Auswertung erforderlichen Gegentakt- bzw. Pseudogegentaktsignale zu erhalten, müssen zwei Referenzmarken bzw. eine Referenzmarke und ein Feld (z.B. Spiegel) zum Erzeugen eines Bezugssignales vorgesehen und abgetastet werden. Durch ungelichmäßige Verschmutzung der Referenzmarken und durch Abstandsänderungen beim Abtasten kann sich das erzeugte photoelektrische Signal so verändern, da eine sichere Auswertung nicht mehr gegeben ist.

In der 1978 veröffentlichten Dissertation von J. Willhelm "Dreigitterschrittgeber — photoelektrische Aufnehmer zur Messung von Lageänderungen" (TU Hannover) sind ausführlich die Theorie und die Zusammenhänge bei derartigen Wegaufnehmern erläutert.

Zudem sind aus der DE—OS—23 16 248 photoelektrische Schrittgeber als sogenannte Zweigittergeber als Durchlichtanordnung und Dreigittergeber als Auflichtanordnung und Dreigittergeber als Durchlichtanordnung und Dreigittergeber als Auflichtanordnung bekannt, die mit Phasengittern arbeitet, wodurch ein größerer Abtastabstand der beiden zueinander verschiebbaren Gitter zulässig ist, und die Empfindlichkeit gegenüber Abstandsänderungen geringer wird. In dieser Druckschrift wird jedoch kein Hinweis darauf gegeben, wie beispielsweise eine Referenzmarke genügend sicher abgetastet und ausgewertet werden kann.

Der Erfindung liegt die Aufgabe zugrunde, eine Vorrichtung der eingangs genannten Art zu schaffen, bei der die Toleranzen de Schwankungen des Abtastabstandes vergröert werden können, bei der ein verhältnismäßig großer Abtastabstand zulässig ist, und bei der dennoch anhand von Referenzmarken Referenzpulse erzeugt werden können.

Diese Aufgabe wird mit einer Vorrichtung gelöst, die die Merkmale des Anspruchs 1 aufweist.

Die Vorteile der erfindungsgemäßen Vorrichtung liegen darin, daß auch bei der Abtastung von Referenzmarken ein verhältnismäßig großer Abtastabstand zulässig ist, der dementsprechend gegenüber Änderungen relativ unempfindlich ist. Ferner ist es bei dieser Vorrichtung möglich, die einzelnen Referenzmarken so auszugestalten, daß beliebige Signalformen erzeugt werden können.

Vorteilhafte Ausgestaltungen entnimmt man den abhängigen Ansprüchen.

Mit Hilfe von Ausführungsbeispielen wird anhand der Zeichnungen die Erfindung näher erläutert, wobei die Darstellungen zum besseren Verständnis stark vereinfacht wurden.

Es zeigen

Figur 1 eine Meßeinrichtung nach dem Auflichtverfahren arbeitend,

Figur 2 eine Draufsicht auf die Meßeinrichtung nach Figur 1 entlang der Schnittlinie II/II,

Figur 3 eine Ansicht auf ein Reflexphasengitter aus Figur 1 entlang der Linie III/III, verkleinert,

Figur 4 eine Ansicht der Brennebene des Kondensors entlang der Linie IV/IV in Figur 2,

Figur 5 einen typischen Signalverlauf mit Phasengittern gemäß Figur 1,

Figur 6 eine vorteilhafte Anordnung von Phasengittern,

Figur 7 ein typischer Signalverlauf mit Phasengittern gemäß Figur 6,

Figur 8 eine besonders vorteilhafte Anordnung von Phasengittern,

Figur 9 eine weitere Variante von Phasengittern zur zusätzlichen Signalmodulation und

Figur 10 eine Anordnung von Phasengittern gemäß Figur 8 mit zusätzlichen phasenverschobenen Phasengittern.

Der im folgenden verwendete Ausdruck "Licht" umfaßt ultraviolette und infrarote Strahlung sowie die im sichtbaren Bereich liegende Strahlung.

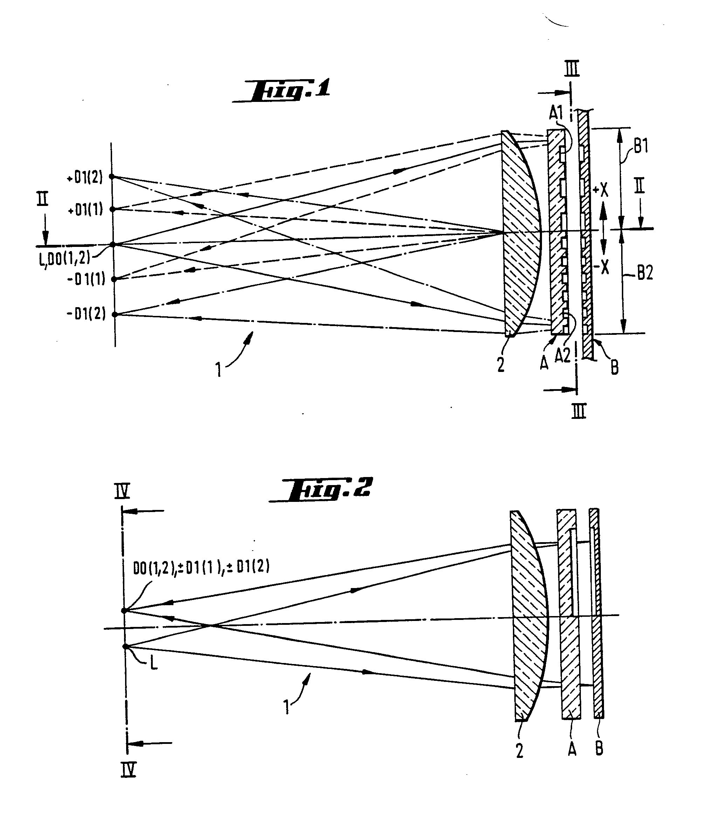

In Figur 1 ist eine Längenmeßeinrichtung 1 nach dem sogenannten Dreigitter-Auflichtprinzip dargestellt. Die Strahlung einer Lichtquelle L wird von einem Kondensor 2 kollimiert und an Phasengittern A und B gebeugt und reflektiert.

Die Phasengitter A und B haben Felder A1, A2, B1, B2 mit periodischer Teilung, die unterschiedliche Gitterkonstanten aufweisen.

In der Brennebene des Kondensors 2 entstehen Beugungsbilder nullter und höherer Ordnung der Lichtquelle L, die den unterschiedlichen Gitterkonstanten und der Gittergestaltung (z. B. Verhältnis Furchenbreite/Gitterkonstante, Furchentiefe etc.) entsprechen. An diesen Stellen sind entsprechend der Gittertheorie Photodetektoren DO bis $\pm$ D1(2) angeordnet.

Jedes Phasengitter A und B haf also zwei Felder A1, A2 und B1, B2, die unterschiedliche Gitterkonstanten aufweisen.

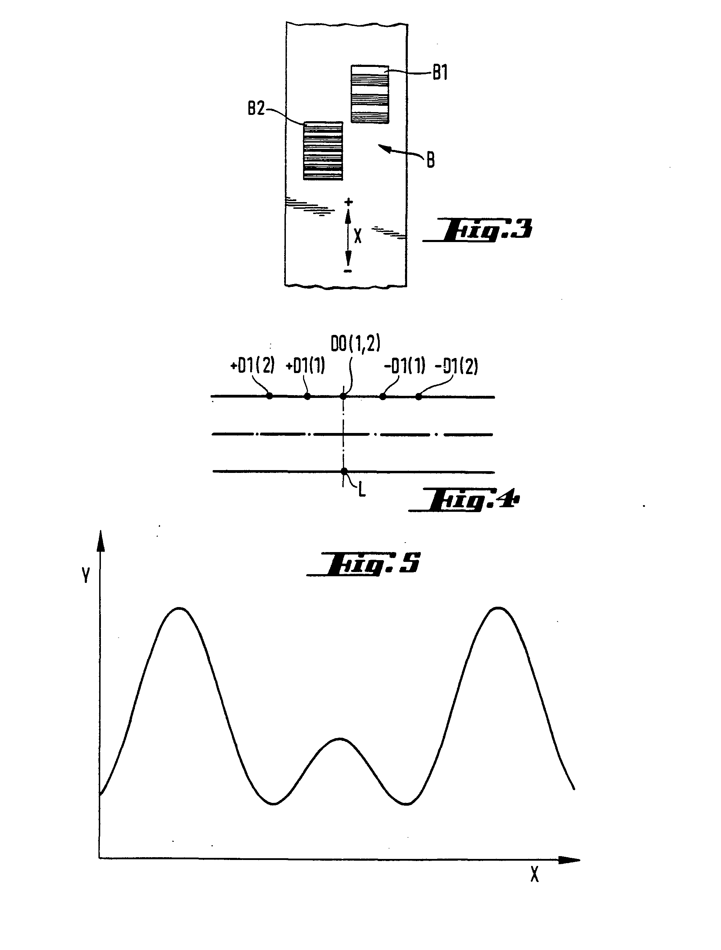

In Figur 2 ist die Längenmeßeinrichtung 1 in der Draufsicht entlang der Linie II/II der Figur 1 gezeigt. Die Lichtquelle L ist aus der optischen Achse versetzt angeordnet, damit die Beugungsbilder nullter Ordnung nicht in die Lichtquelle L zurückgeworfen werden, sondern um den gleichen Betrag versetzt, der Lichtquelle L gegenüber, auf entsprechend angeordnete Photodetektoren DO fallen. Die Lichtquelle L kann jedoch in der optischen Achse verbleiben, wenn nur höhere als die nullte Ordnung ausgewertet werden.

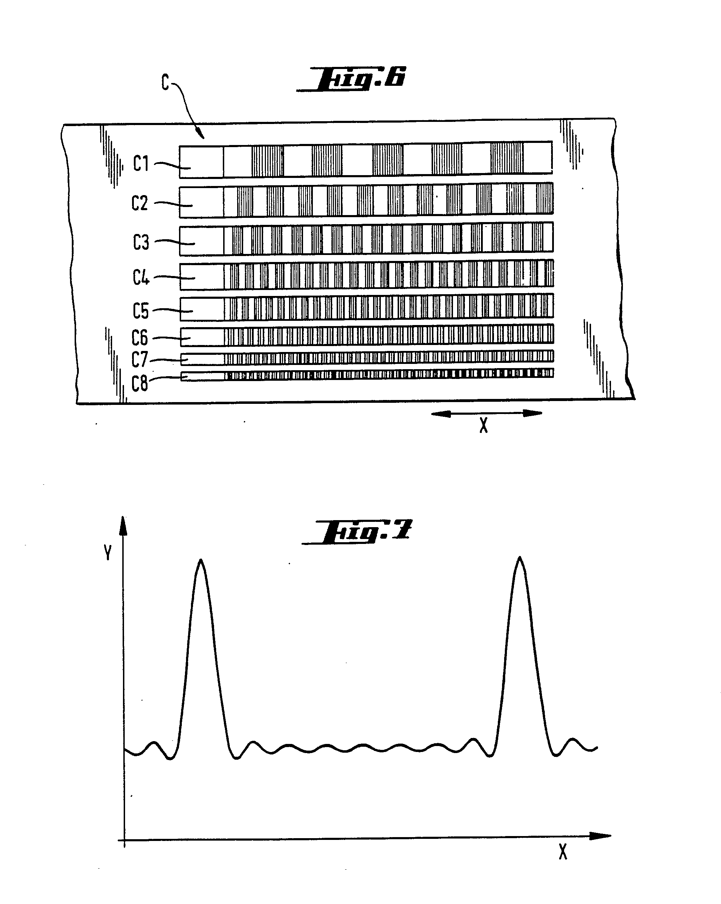

In Figur 3 ist das Reflexphasengitter B abgebildet, das in verkleinerter Darstellung die Phasengitterfelder B1 und B2 entlang der Linie III/III in Figur 1 mit den unterschiedlichen Gitterkonstanten zeigt. Prinzipiell ist auch eine davon abweichende Anordnung der Teilungsfelder B1 und B2 möglich.

Die Felder liegen im kollimierten Strahlenbündel. Die Lage innerhalb dieses Bündels hat keinen Einfluß auf die Lage der Beugungsbilder der Lichtquelle (entspricht der Lage der Detektoren).

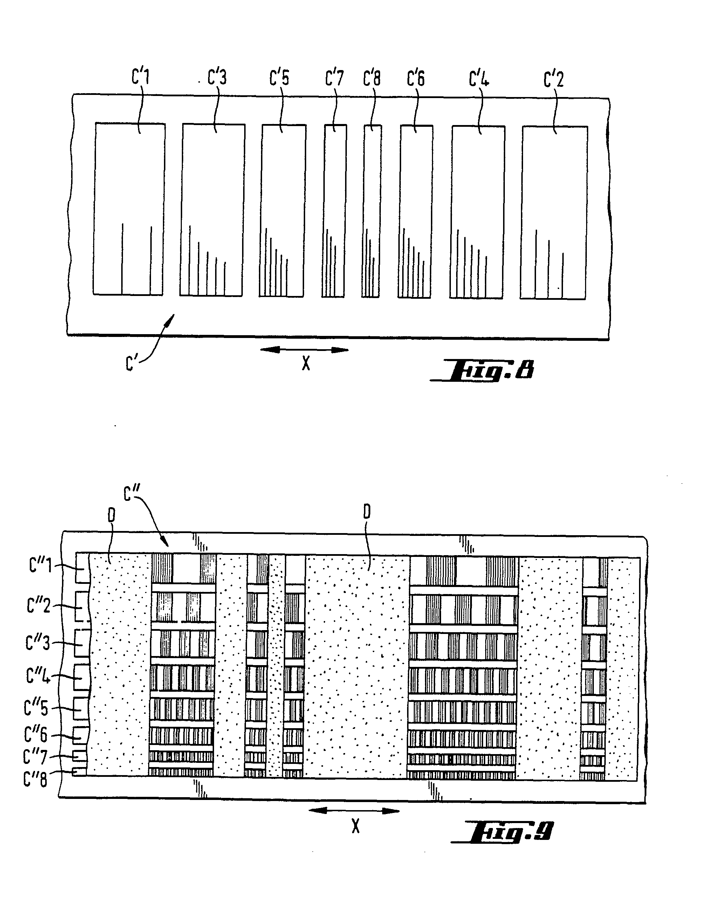

Figur 4, die eine Ansicht der Photodetektoren D1(2) bis -D1(2) zeigt, beruht auf einer Ansicht IV/IV in Figur 2.

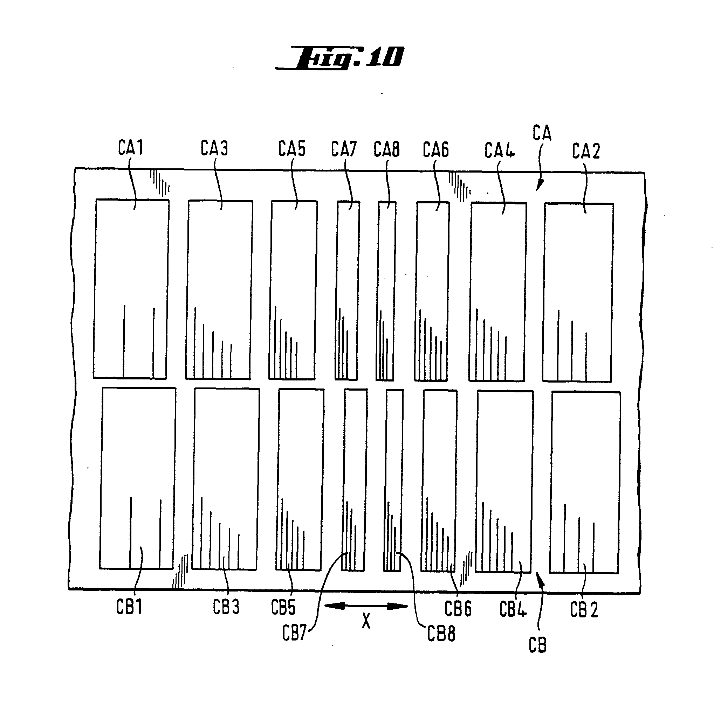

In Figur 5 ist ein typischer Signalverlauf gezeight, wie er mit einer Meßeinrichtung gemäß der Figuren 1 bis 4 erzeugt wird. Dieses Signal wird bei Verschiebung des Phasengitters B in X-Richtung durch Modulation der Lichtquellenbilder erzeugt. Am Photodetektor DO (Figur 1, 2 und 4) kann dieses Signal abgegriffen werden.

In Figur 6 ist der Aufbau eines Phasengitters C gezeigt, das anstelle von zwei Feldern acht Felder C1 bis C8 aufweist, deren Gitterkonstanten im Verhältnis 1:2:3:4:5:6:7:8 ausgestaltet sind. Die Felder C1 bis C8 sind dabei entsprechend einer Fourier-Reihe ausgebildet, und die Flächen der Felder C1 bis C8 sind Konstanten proportional, die den Fourier-Koeffizienten dieser ausgewählten Fourier-Reihe entsprechen.

Bei Bewegungen des Phasengitters C in Meßrichtung X erhält man am Photodetektor DO für die 0. Beugungsordnung einen Signalverlauf, wie er in Figur 7 dargestellt ist.

Ein dazu gegenphasiges Signal (Gegentakt) erhält man durch Auswerten der ±1. Beugungsordnungen unter der Voraussetzung, daß das Verhältnis Furchenbreite/Gitterkonstante der jeweiligen Feldteilungen 1:2 ist.

Eine Variante des Phasengitters C erhält man, wenn die einzelnen Felder C1 bis C8 nicht in Meßrichtung X parallel ausgerichtet sind, sondern, wie am Phasengitter C' in Figur 8 noch weiter vereinfacht gezeigt ist, wenn die Felder C'1 bis C'8 in der gezeigten Reihenfolge in Meßrichtung X hintereinander angeordnet werden. Bei einer solchen Ausgestaltung des Phasengitters C' ist es unempfindlicher gegen Verdrehen um die optische Achse.

Die Flächenproportionalität zu den bereits erwähnten Koeffizienten der Fourier-Reihe bleibt dabei erhalten.

In Figur 9 ist schließlich ein Phasengitter C'' als Kombination der Phasengitter-Anordnung gemäß Figur 6 mit einer weiteren, in Meßrichtung X wirksamen Teilungt D dargestellt, die bewirkt, daß der Signalverlauf gemäß Figur 7 zusätzlich moduliert wird. Dabei werden gemäß Zeichnung nur Teilbereiche der jeweiligen Phasengitterfelder C''1 bis C''8 wirksam.

Die zusätzlich wirksame Teilung D kann dabei vom Phasengitter C'' räumlich in Richtung der optischen Achse abgesetzt angeordnet und z.B. in Meßrichtung X zum Phasengitter C'' verschiebbar sein. Durch diese Maßnahme läßt sich in Meßrichtung X der Ort auswählen, an dem die zusätzliche Teilung D wirksam wird.

Die Felderanordnung auf den gegeneinander verschiebbaren Phasengittern A, B, C, C', C'' können sich — müssen sich aber nicht — entsprechen.

So könen beispielsweise wetiere Längen- oder Winkelteilungsfelder CA, CB vorgesehen sein, bei denen, wie in Figur 10 für zwei derartige Felder gezeigt ist, die Felder CA1 bis CB8 gleicher Gitterkonstante in Meßrichtung um einen Bruchteil bzw. ein Vielfaches der zugehörigen Gitterkonstante zueinander phasenverschoben sind.

Ferner kann man anstelle der Photodetektoren Lichtquellen mit ggf. unterschiedlichen Wellenlängen vorsehen und die Lichtquelle gegen einen Photodetektor austauschen oder diese Elemente in beliebiger Weise kombinieren. So ist es auf einfache Art möglich, durch variable Ansteuerung der Lichtquellen den Signalverlauf zu beeinflussen.

## Patentansprüche

1. Vorrichtung zur photoelektrischen Erzeugung von elektrischen Signalen bei Lagemeßeinrichtungen, insbesondere von Referenzimpulsen bei Längen- oder Winkelmeßeinrichtungen, bei der sich im Strahlengang zwischen wenigstens einer Beleuchtungseinrichtung (L) und wenigstens einem Photodetektor (Di) eine Abtastplatte (A, B) zur Abtastung wenigstens eines Teilungsträgers (B, A, C) befindet wobei die Abtastplatte (A, B) und der Teilungsträger (B, A, C) jeweils wenigstens ein Längen- oder Winkelteilungsfeld aufweisen, sowie mit einer Auswerteschaltung, dadurch gekennzeichnet, daß das jeweils wenigstens eine Längen- oder Winkelteilungsfeld aus mehreren Beugungsgittern (A1 bis CA8) mit periodischer Teilung aufgtebaut ist, die unterschiedliche Gitterkonstanten aufweisen, und daß die davon abgeleiteten periodischen Signale optisch und/oder bei meheren Photodetektoren (Di) durch die Auswerteschaltung elektrisch zusammengefaßt werden.

2. Vorrichtung nach Anspruch 1, dadurch gekennzeichnet, daß dem wenigstens einen Längen- oder Winkelteilungsfeld (A bis CA) ein zusätzliches, nicht periodisches Teilungsfeld (D) zugeordnet ist.

3. Vorrichtung nach Anspruch 1 oder 2, dadurch gekennzeichnet, daß wenigstens das eine Längen- oder Winkelteilungsfeld (A bis CA) als Phasengitter (A1 bis CA8) ausgebildet ist.

4. Vorrichtung nach Anspruch 2, dadurch gekennzeichnet, daß das zusätzliche Teilungsfeld (D) in Meßrichtung X verschiebbar ist.

5. Vorrichtung nach Anspruch 1, dadurch gekennzeichnet, daß ein weiteres Längen- oder Winkelteilungsfeld (CB) vorgesehen ist, das aus mehreren Beugungsgittern (CB1 bis CB8) mit periodischer Teilung, jedoch unterschiedlichen Gitterkonstanten aufgebaut ist, die gegenüber den ersten Beungungsgittern (CA1 bis CA8) gleicher Gitterkonstante in Meßrichtung X jeweils um einen Bruchteil bzw. eine Vielfaches der zugehörigen Gitterkonstanten zueinander phasenverschoben sind.

6. Vorrichtung nach Anspruch 3, dadurch gekennzeichnet, daß die Phasengitter (A1 bis CB8) als Laminar- und/oder Echelettegitter ausgebildet sind.

## Revendications

1. Dispositif pour la production photoélectrique de signaux électriques dans des systèmes de mesure de position, en particulier d'impulsions de référence dans des systèmes de mesure de longueurs ou d'angles, comprenant une plaque d'exploration (A, B) pour l'exploration d'au moins un support de graduation (B, A, C), située dans la marche des rayons entre au moins un dispositif d'éclairage (L) et au moins un photodétecteur (Di), la plaque d'exploration (A, B) et le support de graduation (B, A, C) présentant chacun au moins un champ de graduation longitudinale ou angulaire, ainsi qu'un circuit d'exploitation, caractérisé par le fait que chque champ de graduation longitudinale ou angulaire est formé de plusieurs réseaux de diffraction (A1 à CA8) à graduation périodique, présentant des constantes de réseau différentes, et que les signaux périodiques produits sont combinés optiquement et/ou, dans le cas de plusieurs photodétecteurs (Di), électriquement par le circuit d'exploitation.

2. Dispositif suivant la revendication 1, caractérisé par le fait qu'un champ de graduation (D) supplémentaire, non périodique, est asocié au champ de graduation longitudinale ou angulaire (A à CA).

3. Dispositif suivant la revendication 1 ou 2, caractérisé par le fait que le champ de graduation longitudinale ou angulaire (A à CA) est réalisé sous forme de réseau de phase (A1 à CA8).

4. Dispositif suivant la revendication 2, caractérisé par le fait que le champ de graduation (D) supplémentaire est déplaçable dans la direction de mesure X.

5. Dispositif suivant la revendication 1, caractérisé par le fait qu'il est prévu un autre champ de graduation longitudinale ou angulaire (CB) formé de plusieurs réseaux de diffraction (CB1 à CB8) à graduation périodique, mais ayant des constantes de réseau différentes et déphasées par rapport aux premiers réseaux de diffraction (CA1 à CA8) ayant la même constante de réseau, dans la direction de mesure X, chacun d'une fraction ou d'un multiple de la constante de réseau correspondante.

6. Dispositif suivant la revendication 3, caractérisé par le fait que les réseaux de phase (A1 à CB8) sont réalisés sous la forme de réseaux laminaires et/ou de réseaux à échelettes.

## Claims

Device for the photoelectric generation of electrical signals in position measuring devices, especially of reference pulses in length or angle measuring devices, in which a sensing plate (A, B) is located in the beam path between at least one illuminating device (L) and at least one photodetector (Di) for sensing at least one graduation carrier (B, A, C), wherein the sensing plate (A, B) and the graduation carrier (B, A, C) each have at least one length or angle graduation field, as well as with a processing circuit, characterized in that each at least one length or angle graduation field is formed from a plurality of diffraction gratings (A1 to CA8) with periodic graduation, which have different grating constants, and in that the periodic signals obtained therefrom are combined optically and/or with a plurality of photodetectors (Di) electrically by the processing circuit.

2. Device according to claim 1, characterized in that an additional, non-periodic graduation field (D) is associated with the at least one length or angle graduation field (A to CA).

3. Device according to claim 1 or 2, characterized in that at least the one length or angle graduation field (A to CA) is formed as a phase grating (A1 to CA8).

4. Device according to claim 2, characterized in that the additional graduation field (D) is displaceable in the measuring direction X.

5. Device according to claim 1, characterized in that a further length or angle gradutioan field (CB) is provided, which is formed from a plurality of diffraction gratings (CB1 to CB8) with periodic graduation but differing grating constants, which are phase displaced in the measuring direction X relative to the first diffraction gratings (CA1 to CA8) of like grating constants respectively by a fraction or multiple of the corresponding grating constant.

6. Device according to claim 3, characterized in that the phase gratings (A1 to CB8) are formed as laminar and/or echelette gratings.

# *Fig.1*

# *Fig.2*

Fig.3

Fig.4

Fig.5

## Fig.6

## Fig.7

3

C'1   C'3   C'5   C'7 C'8 C'6   C'4   C'2

C'

X

_Fig.8_

C''

D                                    D

C''1
C''2
C''3
C''4
C''5
C''6
C''7
C''8

X

_Fig.9_

# Fig. 10

CA1  CA3  CA5  CA7 CA8  CA6  CA4  CA  CA2

CB1  CB3  CB5  CB7  X  CB8  CB6  CB4  CB  CB 2